# EUROPEAN PATENT SPECIFICATION

(11) **EP 1 277 294 B1**
(45) Date of publication and mention of the grant of the patent: **14.05.2008**
(21) Application number: 01923941.7
(22) Date of filing: 15.04.2001
(51) Int. Cl.: H04B 10/16

(54) **OPTICAL TRANSPONDER**
OPTISCHER TRANSPONDER
TRANSPONDEUR OPTIQUE

(30) Priority: 18.04.2000 IL 13571500
(43) Date of publication of application: 22.01.2003
(73) Proprietor: ECI Telecom Ltd., Petach-Tikva 49517 (IL)
(72) Inventor: MARMUR, Oren, 55454 Kiryat Ono (IL); AROL, Joseph, 55558 Kiryat Ono (IL); GUR, Ido, 43722 Raanana (IL); MALY, Benny, Satariya (IL)
(74) Representative: Curell Aguilà, Marcelino
(86) International application number: PCT/IL2001/000343
(87) International publication number: WO 2001/080465

(56) References cited:
- EP-A- 0 781 000
- EP-A- 1 126 648
- US-A- 4 840 448

## Description

### Field of the Invention

The invention is in the field of optical transponders.

### Background of the Invention

Optical ring networks include two optical fibers, one dedicated for adding and dropping working channels and the other dedicated for protection channels. Optical ring networks typically include one or more so called unidirectional optical transponders for adding an optical signal to a working channel or dropping one off therefrom, so called 1X2 add direction optical transponders for adding identical optical signals to the working channel and the protection channel, and so called 2X1 drop direction optical transponders for dropping an optical signal from either the working channel or the protection channel.

EP 0620694 describes an optical cross-connect system comprising a wavelength converter which includes an input O/E module (photodiode) connected to a number of E/O converters ( laser diodes) of different wavelengths, which are controlled by a decoder for selecting a required wavelength for the output optical signal.

WO 99/44317 describes a system for protection of WDM optical channels being established between optical network nodes, for safely transmitting data via such channels from one node to another node in the network.

### Summary of the Invention

In accordance with the present invention, there is provided a self contained self-checking optical transponder (10, 30) for a network node, comprising:
( a 1 ) a main input line including a first O/E receiver module (11) capable of converting an optical signal, ingressing from an optical signal source, to a first electrical signal, and including at least a first checking block (17, 18, 19) connected to an electrical output of said first O/E receiver module for checking said first electrical signal,
(a 2) a protection input line including at least one from the following:
   - an electrical bypass shunt (22) connected to the electrical output of said first O/E receiver module (11),
   - a second O/E receiver module for converting a second optical signal to a second electrical signal, being connected to at least a second checking block for checking said second electrical signal;
( b ) a pair of E/O transmitter modules (24, 26) connected in parallel and each capable of converting said first electrical signal or said second electrical signal to an egressing optical signal;
( c ) a control device (12) in communication with at least one of said first and second O/E receiver modules, at least one of said first and second checking blocks and with each of the E/O transmitter modules of said pair, for selecting one of said first and second electrical signals to be converted into said egressing optical signal and for enabling one of said pair of E/O transmitter modules and disabling the other of said pair of E/O transmitter modules; and
( d ) an optical coupler (27) coupled to said pair of E/O transmitter modules (24, 26) for feeding said egressing optical signal from said enabled E/O transmitter module towards an optical signal destination,
thereby the transponder providing the egressing optical signal towards a destination being associated either with said network node or with other network nodes, even in case of malfunction of one of said E/O transmitter modules and/or one of said input lines.

The present invention presents a novel solution to the problem of cessation of data transmission through a conventional unidirectional or drop direction optical transponder having only a single E/O transmitter module in the event of its equipment failure.

### Brief Description of the Drawings

In order to understand the invention and to see how it can be carried out in practice, preferred embodiments will now be described, by way of nonlimiting examples only, with reference to the accompanying drawings, in which similar parts are likewise numbered, and in which:
Fig. 1 is a schematic representation of a dual E/O transmitter module unidirectional optical transponder; and
Fig. 2 is a schematic representation of a dual E/O transmitter module drop direction optical transponder.

### Detailed Description of the Drawings

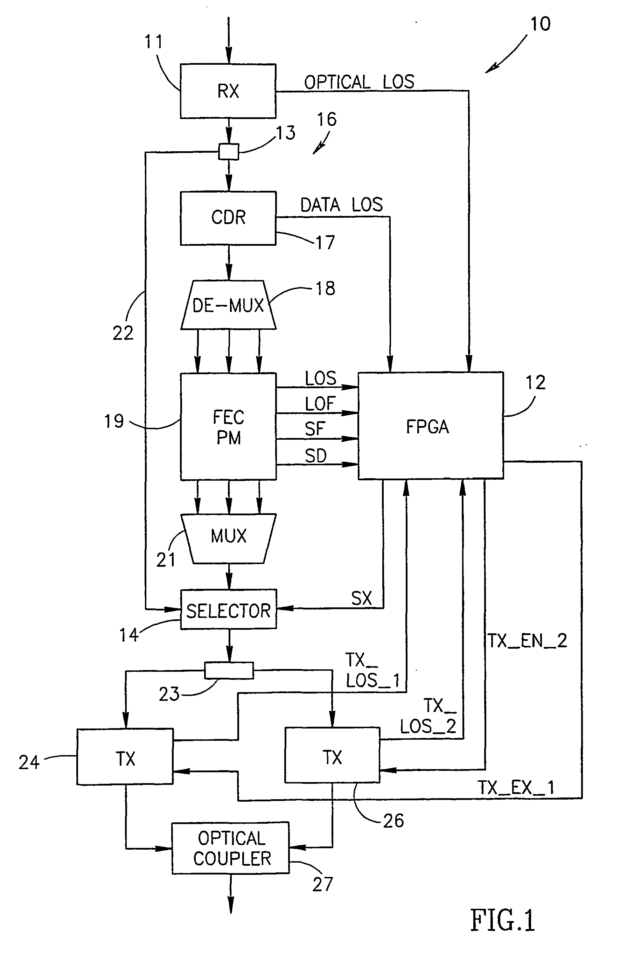

Figure 1 shows a dual E/O transmitter module unidirectional optical transponder 10 including an optical to electrical (O/E) receiver module 11 coupled to an optical signal source (not shown); a field programmable gate array (FPGA) control device 12; an electrical splitter 13; an electrical selector 14 (constituting a switching element); a main path 16 extending between the splitter 13 and the selector 14 and having a Clock and Data Recovery (CDR) unit 17, a demultiplexer 18, a Forward Error Correction (FEC) and Performance Monitoring (PM) unit 19, and a multiplexer 21; a bypass path 22 (constituted by an electrical shunt) extending between the splitter 13 and the selector 14; a second electrical splitter 23; a pair of E/O transmitter modules 24 and 26 connected in parallel, and an optical coupler 27 coupled to an optical signal destination (not shown).

The O/E receiver module 11 converts an ingressing optical signal to an electrical signal, and provides an optical Loss of Signal (LOS) signal to the FPGA control device 12 in the event that no optical signal is detected thereat. The splitter 13 splits an electrical signal from the O/E receiver module 11 into two identical signals which are respectively fed to the main path 16 and the bypass path 22. The CDR unit 17 performs clock and data recovery on an electrical signal, and provides a data Loss of Signal (LOS) signal to the FPGA control unit 11 in the event that no data signal i.e. a stream of consecutive zeros is detected thereat. The FEC and PM unit 19 performs forward error correction and performance monitoring on an electrical signal, and provides a data Loss of Signal (LOS) signal, a Loss of Frame (LOF) signal, a Signal Fail (SF) signal, and a Signal Degrade (SD) signal to the FPGA control device 12 as appropriate. The selector 14 can feed either an electrical signal from one of the main path 16 or the bypass path 22 to the splitter 23 as determined by an SX signal from the FPGA control device 12. The splitter 23 splits the electrical signal to two identical signals which are respectively fed to the E/O transmitter modules 24 and 26. The E/O transmitter modules 24 and 26 are capable of being independently enabled by an TX_EN signal from the FPGA control device 12 and can each convert an electrical signal to an egressing optical signal which is fed to the optical coupler 27. The E/O transmitter modules 24 and 26 provide TX_LOS signals to the FPGA control device 12 in the event that they are enabled but no optical signal is detected thereat.

In the default mode of operation of the optical transponder 10, the FPGA control unit 12 switches the selector 23 to feed electrical signals from the main path 16 to the E/O transmitter module 24, and disables the E/O transmitter module 26. In the case of an TX_LOS_1 signal from the E/O transmitter module 24, it is disabled and the E/O transmitter module 26 is enabled. The protection against equipment failure of the E/O transmitter module 24 by the E/O transmitter module 26 is unaffected by the position selection of the selector 23.

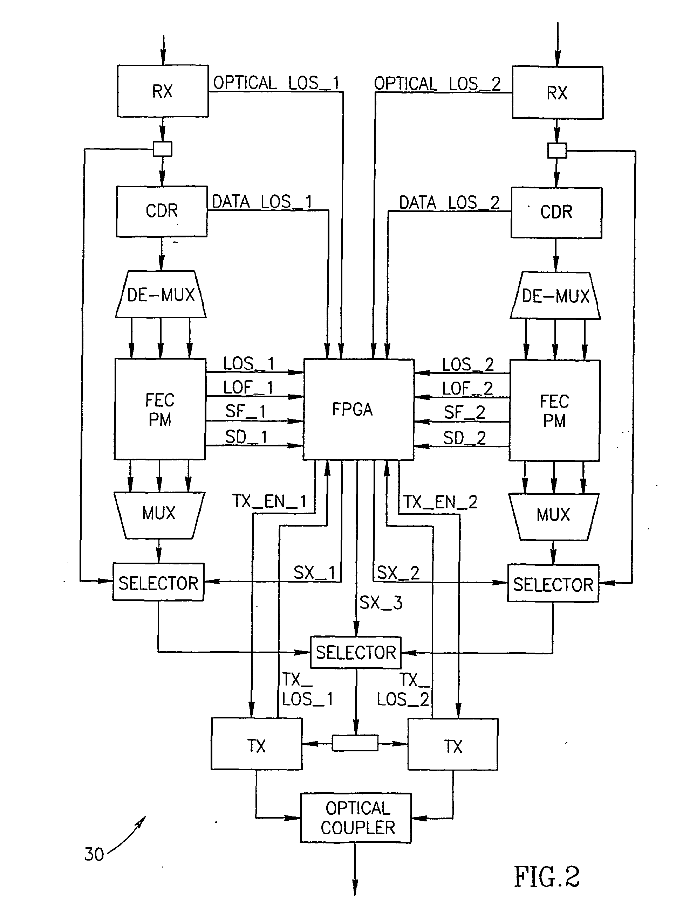

While the invention has been described with respect to a limited number of embodiments, it will be appreciated that many variations, modifications, and other applications of the invention can be made within the scope of the appended claims. For example, the dual E/O transmitter module optical transponder is particularly suitable for implementation as a drop direction optical transponder 30 (see Figure 2).

## Claims

1. An optical transponder (10, 30) for a network node, comprising:
(a) a first O/E receiver module (11) capable of converting an optical signal, ingressing from an optical signal source, to an electrical signal;
(b) a first splitter (13) for splitting said electrical signal into two identical signals and for providing said two signals to a main input line (16) and a protection input line (22), respectively;
(c) a main input line (16) including a first checking block (17, 19) for checking the electrical signal received from the O/E receiver module (11) through the splitter (13);
(d) a protection input line including an electrical bypass shunt (22) connected to the electrical output of the O/E receiver module (11) through the splitter (13);
(e) a first selector (14) adapted to select a first electrical signal from the main path (16) or a second electrical signal from the bypass shunt (22) and to supply the selected signal to a second splitter (23);
(f) a pair of E/O transmitter modules (24, 26) connected in parallel by means of the second splitter (23) and each capable of converting said first electrical signal or said second electrical signal to an egressing optical signal;
(g) a control device (12) connected to said first O/E receiver module (11), said first checking block (17, 19), said first selector (14) and each of the E/O transmitter modules (24, 26) of said pair, for selecting one of said first and second electrical signals to be converted into said egressing optical signal and for enabling one of said pair of E/O transmitter modules (24, 26) and disabling the other of said pair of E/O transmitter modules (24, 26); and
(h) an optical coupler (27), coupled to said pair of E/O transmitter modules (24, 26), for feeding said egressing optical signal from said enabled E/O transmitter module towards an optical signal destination,
wherein the transponder is adapted to provide the egressing optical signal even in case of malfunction of one of said E/O transmitter modules (24, 26) and/or one of said input lines (16, 22).

2. The transponder of claim 1 further comprising
- a second O/E receiver module;
- a third splitter, connected to the output of the second O/E receiver module;
- a second main input line and a second protection input line connected to the output of the third splitter, the second main input line including a second checking block and the second protection input line including a second electrical bypass shunt;
- a second selector coupled to the second main path and to the second bypass shunt; and
- a third selector connected to the output of the second selector and between the first selector and the second splitter,
wherein the control device is also connected to the second O/E receiver module, the second checking block and the second and third selector, for selecting an electrical signal from the first main input line, the first protection input line, the second main input line or the second protection input line.

3. The transponder of claim 2, wherein said transponder is adapted to provide the egressing optical signal in case of malfunction of one of the the following elements:
- one of said E/O transmitter modules;
- one of said O/E receiver modules;
- at least one of said signal checking blocks.

4. The transponder according to any one of the preceding claims, wherein the control device is FPGA based.

5. The transponder according to any one of the preceding claims, wherein said signal checking block comprises a Clock and Data Recovery unit (CDR 17) unit and a Forward Error Correction and Performance Monitoring unit (FEC PM 19).

## Patentansprüche

1. Optischer Transponder (10, 30) für einen Netzwerkknoten, mit:
(a) einem ersten O/E-Empfangsmodul (11), das in der Lage ist, ein von einer optischen Signalquelle eintretendes optisches Signal in ein elektrisches Signal zu wandeln;
(b) einem ersten Splitter (13) zum Aufteilen des elektrischen Signals in zwei identische Signale und zum Bereitstellen der zwei Signale an einer Haupteingangsleitung (16) bzw. einer Schutzeingangsleitung (22);
(c) einer Haupteingangsleitung (16), die einen ersten Prüfblock (17, 19) zum Prüfen des vom O/E-Empfangsmodul (11) durch den Splitter (13) empfangenen elektrischen Signals umfasst;
(d) einer Schutzeingangsleitung, die einen elektrischen Bypass-Shunt (22) aufweist, der an den elektrischen Ausgang des O/E-Empfangsmodul (11) über den Splitter (13) angeschlossen ist;
(e) einer ersten Auswahleinrichtung (14) die dazu ausgebildet ist, ein erstes elektrisches Signal vom Hauptpfad (16) oder ein zweites elektrisches Signal vom Bypass-Shunt (22) auszuwählen und das ausgewählte Signal an einen zweite Splitter (23) zu liefern;
(f) einem Paar von E/O-Sendermodulen (24, 26), die mittels des zweiten Splitters (23) parallel geschaltet sind und je in der Lage sind, das erste elektrische Signal oder das zweite elektrische Signal in ein austretendes optisches Signal zu wandeln;
(g) einer Steuerungseinrichtung (12), die an das erste O/E-Empfangsmodul (11), den ersten Prüfblock (17, 19), die erste Auswahleinrichtung (14) und an jedes der E/O-Sendermodule (24, 26) des Paars angeschlossen ist, um das erste oder zweite elektrische Signal auszuwählen, das in das austretende optische Signal zu wandeln ist, und um ein E/O-Sendermodul des Paars von E/O-Sendermodulen (24, 26) zu aktivieren und das andere E/O-Sendermodul des Paars E/O-Sendermodulen (24, 26) deaktivieren; und
(h) einem optischen Koppler (27), der mit dem Paar von E/O-Sendermodulen (24, 26) zum Einspeisen des austretenden optischen Signals vom aktivierten E/O-Sendermodul in Richtung zu einem optischen Signalziel gekoppelt ist,
wobei der Transponder dazu ausgebildet ist, das austretende optische Signal sogar im Fall einer Fehlfunktion eines der E/O-Sendermodule (24, 26) und/oder einer der Eingangsleitungen (16, 22) bereitzustellen.

2. Transponder nach Anspruch 1, ferner aufweisend
- ein zweites O/E-Empfangsmodul;
- einen dritten Splitter, der an den Ausgang des zweiten O/E-Empfangsmoduls angeschlossen ist;
- eine zweite Haupteingangsleitung und eine zweite Schutzeingangsleitung, die an den Ausgang des dritten Splitters angeschlossen sind, wobei die zweite Haupteingangsleitung einen zweiten Prüfblock und die zweite Schutzeingangsleitung einen zweiten elektrischen Bypass-Shunt aufweist;
- eine zweite Auswahleinrichtung, die mit dem zweiten Hauptsignalpfad und dem zweiten Bypass-Shunt gekoppelt ist; und
- eine dritte Auswahleinrichtung, die an den Ausgang der zweiten Auswahleinrichtung und zwischen der ersten Auswahleinrichtung und den zweiten Splitter angeschlossen ist,
wobei die Steuerungseinrichtung auch an das zweite O/E-Empfangsmodul, den zweiten Prüfblock und an die zweite und dritte Auswahleinrichtung zum Auswählen eines elektrischen Signals von der ersten Haupteingangsleitung, der ersten Schutzeingangsleitung, der zweiten Haupteingangsleitung oder der zweiten Schutzeingangsleitung angeschlossen ist.

3. Transponder nach Anspruch 2, wobei der Transponder dazu ausgebildet ist, ein austretendes optisches Signal im Fall einer Fehlfunktion eines der folgenden Elemente bereitzustellen:
- eines der E/O-Sendermodule;
- eines der O/E-Empfangsmodule;
- zumindest eines der Signalprüfblöcke.

4. Transponder nach einem der vorangegangenen Ansprüche, wobei die Steuerungseinrichtung auf einem FPGA basiert.

5. Transponder nach einem der vorangegangenen Ansprüche, wobei der Signalprüfblock eine Takt- und Datenwiedergewinnungseinheit (CDR 17) und eine Vorwärtsfehlerkorrektur- und Leistungsüberwachungseinheit (FEC PM 19) umfasst.

## Revendications

1. Transpondeur optique (10, 30) pour noeud de réseaux, comprenant :
(a) un premier module récepteur O/E (11) pouvant convertir un signal optique, sortant d'une source de signaux optiques, en un signal électrique ;
(b) un premier séparateur (13) servant à séparer ledit signal électrique en deux signaux identiques et à envoyer lesdits deux signaux respectivement à une ligne d'alimentation principale (16) et à une ligne d'alimentation de protection (22) ;
(c) une ligne d'alimentation principale (16) comprenant un premier bloc de contrôle (17, 19) servant à contrôler le signal électrique reçu du module récepteur O/E (11) à travers le séparateur (13) ;
(d) une ligne d'alimentation de protection comprenant un shunt électrique (22) connecté à la sortie électrique du module récepteur O/E (11) à travers le séparateur (13) ;
(e) un premier sélecteur (14) adapté pour sélectionner un premier signal électrique depuis le chemin principal (16) ou un second signal électrique depuis le shunt électrique (22) et pour envoyer le signal sélectionné à un deuxième séparateur (23) ;
(f) une paire de modules transmetteurs E/O (24, 26) connectés en parallèle par le deuxième séparateur (23) et pouvant chacun convertir ledit premier signal électrique ou ledit second signal électrique en un signal optique sortant ;
(g) un dispositif de commande (12) connecté audit premier module récepteur O/E (11), audit premier bloc de contrôle (17, 19), audit premier sélecteur (14) et à chacun des modules émetteurs E/O (24, 26) de ladite paire, pour sélectionner l'un desdits premier et second signaux à convertir en ledit signal optique sortant et pour activer l'un de ladite paire de modules émetteurs E/O (24, 26) et désactiver l'autre de ladite paire de modules émetteurs E/O (24, 26) ; et
(h) un connecteur optique (27) couplé à ladite paire de modules émetteurs E/O (24, 26) pour alimenter ledit signal optique sortant depuis ledit module émetteur activé E/O vers une destination de signal optique,
dans lequel le transpondeur est adapté pour envoyer le signal optique sortant même en cas de disfonctionnement de l'un desdits modules émetteurs E/O (24, 26) et/ou l'une des dites lignes d'alimentation (16, 22).

2. Transpondeur selon la revendication 1, comprenant en outre :
◆ un second module récepteur O/E ;
◆ un troisième séparateur, connecté à la sortie du second module récepteur O/E ;
◆ une seconde ligne d'alimentation principale et une seconde ligne d'alimentation de protection connectées à la sortie du troisième séparateur, la seconde ligne d'alimentation principale comprenant un second bloc de contrôle et la seconde ligne d'alimentation de protection comprenant un second shunt électrique ;
◆ un deuxième sélecteur couplé au second chemin principal et au second shunt électrique ; et
◆ un troisième sélecteur connecté à la sortie du deuxième sélecteur et entre le premier sélecteur et le deuxième séparateur,
dans lequel le dispositif de commande est également connecté au second module récepteur O/E, au second bloc de contrôle et au deuxième et au troisième sélecteurs, pour sélectionner un signal électrique depuis la première ligne d'alimentation principale, la première ligne d'alimentation de protection, la seconde ligne d'alimentation principale ou la seconde ligne d'alimentation de protection.

3. Transpondeur selon la revendication 2, ledit transpondeur étant adapté pour envoyer le signal optique sortant en cas de disfonctionnement de l'un des éléments suivants :
◆ un desdits modules émetteurs E/O ;
◆ un desdits modules récepteurs O/E ;
◆ au moins un desdits blocs de contrôle des signaux.

4. Transpondeur selon l'une quelconque des revendications précédentes, dans lequel le dispositif de commande est architecturé, autour du FPGA.

5. Transpondeur selon l'une quelconque des revendications précédentes, dans lequel ledit bloc de contrôle des signaux comprend un dispositif de récupération d'horloge et de données (CDR 17) et un dispositif de correction d'erreurs sans voie de retour et de contrôle de performances (FEC PM 19).
